(19) Europäisches Patentamt / European Patent Office / Office européen des brevets

(11) **EP 1 658 630 B1**

(12) **FASCICULE DE BREVET EUROPEEN**

(45) Date de publication et mention
de la délivrance du brevet:
**07.10.2009 Bulletin 2009/41**

(21) Numéro de dépôt: **04786392.3**

(22) Date de dépôt: **25.08.2004**

(51) Int Cl.:
***H01J 7/18*** *(2006.01)*

(86) Numéro de dépôt international:
**PCT/FR2004/050394**

(87) Numéro de publication internationale:
**WO 2005/024884 (17.03.2005 Gazette 2005/11)**

(54) **COMPOSE PIEGEUR DE L'HYDROGENE, PROCEDE DE FABRICATION ET UTILISATIONS**

WASSERSTOFF-TRAPPER-ZUSAMMENSETZUNG HERSTELLUNGSVERFAHREN UND VERWENDUNGEN DAFÜR

HYDROGEN TRAPPER COMPOUND, METHOD FOR THE PRODUCTION AND USES THEREOF

(84) Etats contractants désignés:
**AT BE BG CH CY CZ DE DK EE ES FI FR GB GR HU IE IT LI LU MC NL PL PT RO SE SI SK TR**

(30) Priorité: **29.08.2003 FR 0350475**

(43) Date de publication de la demande:
**24.05.2006 Bulletin 2006/21**

(73) Titulaires:
- **COMMISSARIAT A L'ENERGIE ATOMIQUE
  75015 Paris (FR)**
- **COMPAGNIE GENERALE DES MATIERES NUCLEAIRES
  78140 Velizy Villacoublay (FR)**

(72) Inventeurs:
- **CAMARO, Sylvie
  F-13100 Aix en Provence (FR)**
- **RAGETLY, Quentin
  F-13006 Marseille (FR)**
- **RIGLET-MARTIAL, Chantal
  F-13100 Le Tholonet (FR)**

(74) Mandataire: **Poulin, Gérard et al
Brevalex
3, rue du Docteur Lancereaux
75008 Paris (FR)**

(56) Documents cités:
**WO-A-97/26082        US-A- 5 888 665
US-A1- 2003 136 989**

- **DATABASE WPI Section Ch, Week 199212 Derwent Publications Ltd., London, GB; Class E36, AN 1992-089969 XP002274620 & JP 02 980425 A (JAPAN PIONICS) 22 novembre 1999 (1999-11-22)**
- **DATABASE WPI Section Ch, Week 200301 Derwent Publications Ltd., London, GB; Class A97, AN 2002-010551 XP002274621 & IT 1 318 392 A (GETTERS SPA) 25 août 2003 (2003-08-25)**
- **DATABASE WPI Section EI, Week 200035 Derwent Publications Ltd., London, GB; Class V05, AN 1998-232868 XP002274622 & JP 10 255660 A (COMMISSARIAT À L'ÉNERGIE ATOMIQUE) 25 septembre 1998 (1998-09-25)**

## Description

La présente invention se rapporte à un composé piégeur d'hydrogène, à un procédé de fabrication de ce composé, ainsi qu'aux utilisations de ce composé. Par hydrogène, on entend le dihydrogène gazeux de formule G1G2, dans laquelle G1 et G2 sont $^{1}_{1}\text{H}$, $^{2}_{1}\text{H}$ (deutérium) ou $^{3}_{1}\text{H}$ (tritium).

La propriété principale du composé piégeur d'hydrogène de l'invention réside dans le fait qu'il piège spontanément et quantitativement l'hydrogène gazeux à la pression atmosphérique et même à de faibles pressions partielles, à température ambiante.

La présente invention trouve des applications dans toutes situations, par exemple dans l'industrie ou au laboratoire, où de l'hydrogène ou du tritium gazeux est généré, dégagé ou évacué, dans l'objectif par exemple d'en limiter les rejets, notamment pour des raisons de pollution ou de contamination, ou d'en contrôler les teneurs dans des milieux confinés, notamment pour des raisons de sécurité.

Une application importante concerne l'incorporation du composé de l'invention dans un matériau, par exemple de conditionnement de déchets, par exemple un bitume, au sein duquel de l'hydrogène est susceptible de se former, notamment par radiolyse. Le piégeage instantané de l'hydrogène généré in situ permet au matériau de conserver son intégrité, c'est à dire qu'il ne se déforme pas, ni se fissure, ce qui augmente considérablement sa tenue mécanique vis-à-vis de la production de gaz et donc sa durabilité.

## Etat de la technique antérieure

L'hydrogène est un gaz potentiellement dangereux susceptible de s'enflammer ou d'exploser en présence d'air. Dans les installations, industrielles notamment, la prévention du risque hydrogène en cas de source continue peut être assurée soit par ventilation, soit par combustion contrôlée, soit encore par piégeage par voie catalytique en milieu oxygéné ou par voie chimique en milieu appauvri en oxygène.

Dans le cas d'un milieu confiné pauvre en oxygène, les composés chimiques piégeurs d'hydrogène les plus couramment envisagés sont les composés organiques, par exemple ceux décrits dans le document WO-A-0168516, les hydrures métalliques, par exemple ceux décrits dans le document US-A-5,888,665 ou les oxydes métalliques. Selon l'application envisagée, ces composés présentent néanmoins un certain nombre d'inconvénients liés en particulier à la réversibilité potentielle du piégeage, à leur instabilité à long terme (problèmes de décomposition chimique, radiolytique...), et aux conditions de mise en oeuvre (température, catalyseur...).

Par ailleurs, les recherches sur la réactivité de l'hydrogène vis à vis des matériaux solides se sont intensifiées ces dernières années, notamment dans le cadre du développement des piles à combustible, sur la voie de composés permettant un conditionnement réversible de l'hydrogène. Dans ce contexte, les matériaux les plus prometteurs actuellement sont des composés solides de type hydrures, par exemple de palladium, titane-fer, magnésium-nickel, zirconium-manganèse, lanthane-nickel, etc., dont les capacités d'adsorption exprimées en masse de $H_2$ piégé par masse de métal se situent pour la plupart à une valeur de 1 à 2%, ou des structures tubulaires carbonées de la taille du nanomètre (nanotubes) telles que celles décrites dans le document WO-A-9726082, pouvant présenter des capacités d'adsorption très importantes.

La sûreté et la compacité sont les avantages significatifs de ces modes de conditionnement. Les inconvénients majeurs résident dans leur coût, leur efficacité, leur faisabilité et leur disponibilité.

Il faut noter que les avantages et inconvénients des différents composés piégeurs connus sont étroitement liés à leurs applications : ainsi, par exemple, la réversibilité du piégeage/stockage de $H_2$ constitue l'objectif essentiel des matériaux développés dans le cadre des piles à combustibles alors que cette propriété est rédhibitoire pour des applications telles que le piégeage de $H_2$ généré par radiolyse dans les enrobés bitume de déchets radioactifs.

Dans l'industrie nucléaire, les déchets radioactifs de faible et moyenne activité sont conditionnés dans des matrices solides, comme le bitume par exemple. Parmi les matériaux de conditionnement utilisés, le bitume présente de nombreux avantages pour le confinement et le conditionnement des déchets. Majoritairement constitué de composés aromatiques, il compte parmi les matrices organiques les moins sensibles à l'irradiation. Ainsi, son taux de production d'hydrogène de radiolyse est plutôt faible, de l'ordre de 0,4 molécules/100 eV. Néanmoins, compte tenu de ses propriétés de transfert très faibles, ce qui en fait un atout vis à vis de l'intrusion d'espèces et du relâchement de radionucléides en scénarios d'entreposage ou de conditionnement, la matrice bitume évacue difficilement l'hydrogène généré in situ par radiolyse, ce qui peut engendrer une perte d'intégrité du matériau (gonflement, fissuration) si l'activité incorporée dans le matériau dépasse le seuil correspondant à la capacité maximale d'évacuation par diffusion.

Les inconvénients liés au gonflement par radiolyse interne de la matrice bitume limitent significativement les activités admissibles incorporables par colis de déchets d'où une augmentation du nombre de colis produits, ce qui est économiquement défavorable.

L'incorporation d'un composé piégeur d'hydrogène dans les colis bitumés de déchets radioactifs permettrait d'une part de réduire significativement leur aptitude au gonflement en situation d'entreposage et d'autre part d'augmenter sensiblement les activités équivalentes incorporées par colis de déchets tout en garantissant une bonne tenue mécanique du matériau vis-à-vis de la production de gaz. Or les composés de type organique, hydrures ou nanotubes sont mal adaptés dans ce contexte, du fait des inconvénients déjà cités de ces matériaux, auxquels s'ajoute la réversibilité potentielle du piégeage ainsi que le risque d'incompatibilité, chimique notamment, au sein des colis de déchets radioactifs. La réversibilité potentielle du piégeage est un inconvénient majeur de certains composés piégeurs de $H_2$ connus, pour l'application piégeage de $H_2$ de radiolyse dans les enrobés bitume.

## Exposé de l'invention

La présente invention a précisément pour objet de répondre au besoin de disposer d'un composé :

- capable de piéger irréversiblement et quantitativement l'hydrogène, aussi bien à l'état de gaz libre que généré au sein d'un matériau, par exemple par radiolyse, dans les conditions normales de température et de pression ;
- de fabrication simple et de manipulation aisée :

- de coût réduit ;
- stable dans le temps ;
- résistant à la radiolyse ;
- ayant un large spectre d'utilisations.

Les composés de la présente invention sont des composés minéraux de formule générale :

$$MX \, (OH)$$

dans laquelle :

- M représente un élément de transition divalent ;
- O représente un atome d'oxygène ;
- X représente un atome du groupe 16 de la classification périodique des éléments, hormis O et
- H représente un atome d'hydrogène

M peut être choisi par exemple dans le groupe constitué de Cr, Mn, Fe, Co, Ni, Cu, Zn. De préférence M est Co ou Ni.
X peut être choisi dans le groupe constitué de S, Se, Te, ou Po. De préférence, X est S.
Le composé de la présente invention piège spontanément et efficacement, dès la température ambiante, l'hydrogène par interaction gaz-solide selon un mécanisme d'oxydoréduction transformant le composé de l'invention en MX et l'hydrogène en $H_2O$ selon l'équation chimique suivante :

- Réduction de MX(OH) :

$$MX \, (OH) + e^- <=> MX + OH^-$$

- Oxydation de $H_2$ :

$$\tfrac{1}{2} \, H_2 + OH^- <=> H_2O + e^-$$

- Soit l'équation global :

$$MX \, (OH) + \tfrac{1}{2} \, H_2 \rightarrow MX + H_2O$$

Par exemple pour M étant Co et X étant S, CoSOH est transformé en CoS et $H_2$ en $H_2O$ selon l'équation chimique suivante:

o Réduction de CoS(OH) :

$$CoS \, (OH) + e^- <=> CoS + OH^-$$

• Oxydation de $H_2$ :

$$\frac{1}{2} H_2 + OH^- <=> H_2O + e^-$$

• Soit l'équation global :

$$CoS(OH) + \frac{1}{2} H_2 \rightarrow CoS + H_2O$$

En outre, le composé de l'invention peut aussi interagir selon un mécanisme similaire avec d'autres gaz réducteurs tels le monoxyde de carbone CO transformé en dioxyde de carbone ($CO_2$ ou $H_2CO_3$) ou le monoxyde d'azote NO transformé en dioxyde d'azote ($NO_2$ ou $H_2NO_3$).

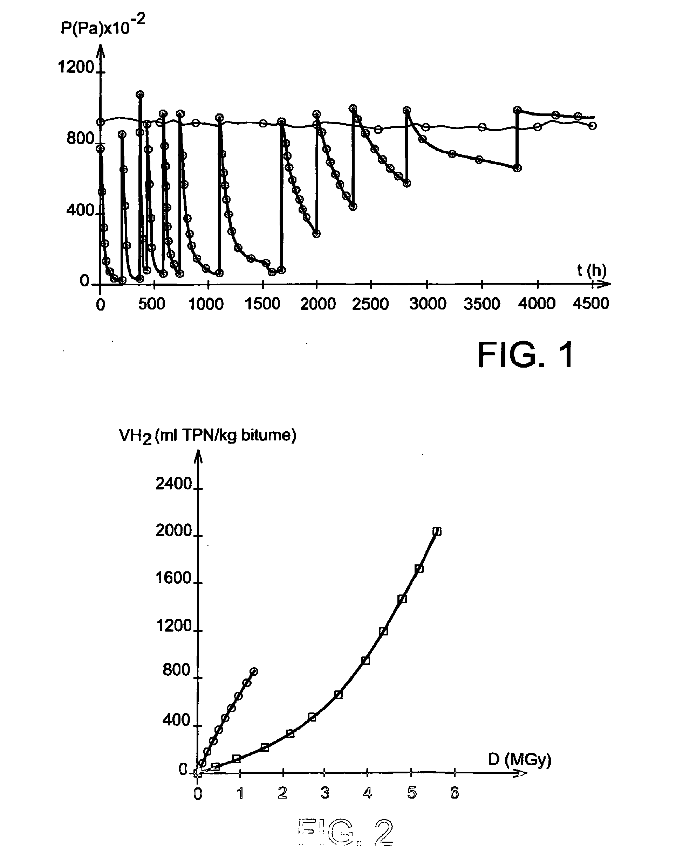

Le composé MSOH de la présente invention est un sulfure alcalin du métal M dont la composition chimique est tout à fait différente de celle du composé commercial MS synthétisé en milieu acide, lequel présente peu de réactivité vis à vis de l'hydrogène gazeux comme cela est montré sur la figure 1 annexée.

Les composés de la présente invention, par exemple ceux fabriqués avec M étant Co ou Ni, possèdent une capacité de piégeage de 0,5 mole de $H_2$ par mole de composé, soit 190 1 $H_2$ TPN/kg M (TPN : Température et Pression Normales, 273°K et $10^5$ Pa), soit une capacité de piégeage, exprimée en masse de $H_2$ piégé par masse de M, de 1,7%. La pression atteinte à l'équilibre est inférieure à $10^3$ Pa (0,01 bar). Par exemple, pour des composés de surface spécifique variant entre 25 et 75 $m^2$/g, la cinétique de piégeage sous une pression de $10^5$ Pa (1 bar) varie entre 0,05 ml TPN $H_2.g^{-1}$ Co.$h^{-1}$ et 1,1 ml TPN $H_2.g^{-1}$ Co.$h^{-1}$ (ml de $H_2$ à température et pression normales par gramme de Co et par heure) dans la gamme de température de 23,5°C à 50°C.

Les composés de l'invention piègent spontanément et quantitativement l'hydrogène gazeux à la pression atmosphérique et dans une large gamme de pressions partielles de $H_2$, en particulier entre $10^3$ Pa et $10^5$ Pa à température ambiante. En outre, ces composés sont également très efficaces pour des pressions partielles de $H_2$ supérieures à $10^5$ Pa ou inférieures à $10^3$ Pa.

L'efficacité de piégeage des composés de l'invention les situent donc parmi les piégeurs d'hydrogène gazeux les plus performants. Le composé piégeur de $H_2$ de la présente invention fonctionne efficacement dès la température ambiante contrairement à la plupart des autres composés existants, peu efficaces dans les conditions normales de température et dont l'efficacité n'est effective qu'à température élevée. Il fonctionne aussi en température, au moins jusqu'à la température de 50°C que nous avons testée ;

L'efficacité du composé de la présente invention a été testée dans une gamme de pression partielle de $H_2$ variant entre de $10^5$ Pa (1 bar) à $10^3$ Pa (0,01 bar). Néanmoins, la réaction de piégeage étant thermodynamiquement d'autant plus favorable que la pression partielle de $H_2$ est élevée, il est vraisemblable que le composé piégeur soit également très efficace pour des pressions partielles de $H_2$ supérieures à $10^5$ Pa (1 bar).

La constante thermodynamique d'équilibre de la réaction de piégeage de $H_2$ n'a pas été mesurée mais l'expérience montre qu'elle correspond à une pression partielle d'équilibre inférieure à $10^3$ Pa ce qui indique que le produit devrait être encore efficace dans la gamme de pressions partielles variant entre la pression partielle d'équilibre (< $10^3$ Pa) et $10^3$ Pa.

Les composés de l'invention, à l'état pulvérulent, doivent de préférence être conservés à l'abri de l'air pour les protéger de l'oxydation.

De manière générale, les composés de l'invention sont fabriqués à partir d'un mélange d'éléments métalliques divalents, pour obtenir un mélange de composés minéraux réactifs vis-à-vis de l'hydrogène gazeux.

Les procédés de fabrication de la présente invention reposent sur l'interaction en solution aqueuse entre au moins un sel dissous de X (c'est à dire $X^{2-}$) et au moins un sel métallique dissous de M (c'est à dire $M^{2+}$), de manière à former un précipité d'au moins un sel métallique constitutif d'un composé de la présente invention.

Les concentrations des deux réactifs en solution aqueuse peuvent varier dans une large gamme jusqu'à leur limite de solubilité, par exemple de $10^{-1}$ M à 1,5 M.

Selon un premier mode de réalisation de l'invention, les composé s de l'invention peu vent être synthétisés par mélange de deux solutions aqueuses, une première solution aqueuse comprenant le, au moins un, sel dissous de l'espèce $X^2$, et une deuxième solution aqueuse comprenant le, au moins un, sel métallique dissous.

Selon un second mode de réalisation de l'invention, les composés peut être synthétisés par dissolution simultanée ou bien successive des deux réactifs, c'est à dire d'au moins un el de l'espèce $X^{2-}$ et d'au moins un sel métallique, au sein d'une seule solution aqueuse.

Quel que soit le mode de réalisation choisi, selon l'invention, le sel de l'espèce $X^{2-}$ peut-être choisi avantageusement parmi $Na_2X$, $(NH_4)_2X$, $Li_2X$, $K_2X$ ou un mélange de ceux-ci.

Quel que soit le mode de réalisation choisi, selon l'invention, le sel métallique de M peut être choisi avantageusement parmi $MSO_4$, $xH_2O$ ; $M(NO_3)_2$; $M(ClO_4)_2$, $xH_2O$ ou $MCl_2$, M étant tel que défini ci-dessus.

Les composés piégeurs d'hydrogène de la présente invention sont stables en solution aqueuse dans une large

4

gamme de pH. Cependant, si le pH de la suspension finale est ajusté à une valeur trop basse ou trop élevée, les composés de l'invention sont susceptibles de se décomposer, ce qui peut réduire considérablement la quantité de produit réactif vis-à-vis de l'hydrogène. Par conséquent, il est préférable de veiller à ce que le pH de la suspension finale se situe dans la gamme de 4 à 12, de préférence dans l'intervalle 7,5 à 10,5.

Le rendement de précipitation des composés de la présente invention est optimum pour un rapport molaire théorique $[X^{2-}] / [M^{2+}]$ compris entre 7/8 et 1. Si le rapport molaire $[X^{2-}] / [M^{2+}]$ est inférieur au rapport optimum, la synthèse conduit à des composés de même composition que ceux de la présente invention mais le rendement de précipitation diminue. Ainsi, selon la qualité des réactifs (sulfure alcalin et sel métallique), un rendement de précipitation optimal peut avantageusement être atteint en fixant un rapport molaire $[X^{2-}] / [M^{2+}]$ de 7/8 à 1,5.

Les composés de la présente invention, après synthèse, sous forme de précipités en suspension, peuvent être séparés de leur phase aqueuse par exemple par décantation, filtration ou centrifugation. Ensuite, ils peu vent être éventuellement lavés à l'eau, puis séchés sous air ou sous atmosphère inerte, par exemple à une température de 70°C à 140°C. Le risque d'oxydation du produit sous air est d'autant plus faible que la température de séchage est basse (~70°C) ce qui peut induire une durée de séchage assez longue. Ainsi, la température de séchage retenue expérimentalement résulte de préférence d'un compromis entre rapidité de séchage et minimisation du risque d'oxydation du produit. Un ordre de grandeur est de 36 heures de séchage à 70°C pour un composé humide extrait par centrifugation conduisant à 10 g de composé sec.

Les composés secs obtenus peuvent être broyés, et éventuellement tamisés afin d'obtenir une granulométrie homogène. Ce traitement peut être utile, notamment lorsque les composés de la présente invention sont incorporés dans un matériau, notamment par souci d'intégrité de la matrice et d'homogénéité du piégeage de l'hydrogène au sein dudit matériau.

Vis-à-vis du piégeage de $H_2$, d'un point de vue théorique, plus le produit est divisé, plus sa surface spécifique est grande et donc plus le produit est efficace (rendement de piégeage proche du rendement thermodynamique). Expérimentalement, la réactivité du composé vis-à-vis de $H_2$ est telle que la granulométrie du composé ne constitue pas un paramètre critique. En d'autres termes, le produit reste efficace quelle que soit sa granulométrie.

En revanche, la granulométrie des sels est importante pour leur incorporation dans un matériau solide, afin de préserver l'intégrité de la matrice (risque de fissuration) et de garantir une bonne homogénéité de l'enrobé. Dans le cas d'une matrice bitume, la granulométrie typique des sels incorporés varie entre 0,2 et 300 $\mu$m avec un maximum dans l'intervalle 20 à 50 $\mu$m.

Les composés de la présente invention peuvent être incorporés, ou enrobés, dans un matériau organique soit sous forme pulvérulente sèche ou humide, de préférence de granulométrie homogène, par exemple celles précitées, soit sous forme de précipité en suspension, de préférence dans une solution non oxydante.

Cette incorporation s'inscrit dans un certain nombre d'applications de la présente invention, dans lesquelles le piégeage de $H_2$ est réalisé au sein même d'un matériau, par exemple organique, où il est généré et/ou dans lequel il est susceptible de migrer, par diffusion interne ou externe. Le matériau forme alors une matrice dans laquelle est incorporé le composé piégeur de $H_2$. Il peut s'agir par exemple de matériaux de conditionnement de déchets, tels les matériaux bitumineux pour les déchets nucléaires, ou de matériaux inertes destinés à stabiliser le composé piégeur initialement pulvérulent sous une forme compacte présentant une bonne tenue mécanique et donc plus aisément manipulable.

Un matériau organique susceptible d'incorporer le composé piégeur de $H_2$ de la présente invention peut-être par exemple le bitume pour le conditionnement des déchets radioactifs.

Les bitumes utilisables dans la présente invention peuvent être ceux connus de l'homme du métier.

Les composés de la présente invention sont de préférence incorporés dans un matériau organique chimiquement inerte vis à vis desdits composés et dans une proportion adéquate pour ne pas fragiliser les propriétés mécaniques dudit matériau une fois durci.

Selon l'invention, dans l'exemple d'un matériau à base de bitume, la quantité de composé(s) piégeur(s) d'hydrogène incorporable peut avantageusement être de 1,5% à 82% au total exprimée en masse de composé/masse de bitume.

Quelle que soit la matrice considérée, la quantité maximale de sels incorporables y compris le composé piégeur de $H_2$, résulte d'un compromis entre taux d'incorporation, maniabilité et intégrité de l'enrobé final. Dans le cas d'une matrice bitume, la charge saline maximale, quel que soit le sel incorporé, selon ces critères ne peut dépasser 45% massique (exprimé en masse de sel)/ enrobé soit 82% massique / bitume. Ce qui signifie que si le composé piégeur est introduit à hauteur de x% par rapport à la masse de bitume, alors au maximum, le déchet est introduit à hauteur de (82 - x)% par rapport à la masse de bitume.

Par ailleurs, nos essais ont montré, pour le composé CoSOH, qu'en deçà d'une teneur en Co de 0,45% massique / enrobé pour un enrobé bitume à 45% de charge saline, soit une teneur en CoSOH de 1,5% massique / bitume, le piégeage de $H_2$ généré par radiolyse à un débit de dose moyen de 400 Gy/h n'est pas significatif.

En conséquence, la quantité de composé(s) piégeur(s) incorporable en matrice bitume pourrait avantageusement varier entre 1,5% massique / bitume et 82% massique / bitume. Nos propres essais ont porté sur des teneurs en composé piégeur variant entre 1,5% et 20%, exprimées en masse de composé piégeur / masse de bitume.

L'incorporation dans le matériau organique peut être réalisée par tout procédé connu de l'homme du métier pour incorporer une poudre ou une suspension dans un matériau, notamment par mélange, par exemple mécanique, du composé de la présente invention avec le matériau, éventuellement rendu liquide au préalable, par exemple par solubilisation ou par chauffage, suivi du durcissement du matériau enrobé, éventuellement après évaporation du solvant et/ou refroidissement.

Lorsque le composé de l'invention se présente sous forme de préparation en suspension, la phase liquide peut être partiellement éliminée par décantation avant incorporation du composé de l'invention dans le matériau organique. La phase liquide peut aussi être évaporée par chauffage lors de l'incorporation du composé dans le matériau organique.

La présente invention se rapporte également à un matériau organique conditionnant, ledit matériau comprenant un matériau organique de conditionnement de déchets et un composé piégeur d'hydrogène selon l'invention.

Le déchet qui peut être conditionné au moyen d'un tel matériau conditionnant peut être un déchet solide radioactif, obtenu par exemple par traitement chimique de co-précipitation d'un effluent radioactif, ou bien un déchet solide industriel non radioactif comme par exemple un catalyseur usé non recyclable ou un déchet de charbon actif, par exemple tel que décrit dans le document Christelle Sing-Tenière, « Etude des procédés de stabilisation/solidification des déchets solides poreux à base de liants hydrauliques ou de liants bitumineux », Thèse de l'Institut National des Sciences Appliquées de Lyon ( 24 février 1988).

Le matériau organique de conditionnement peut être un bitume, par exemple tel que ceux connus de l'homme du métier pour le conditionnement de déchets radioactifs. Il peut également s'agir de tout autre matériau organique adéquat pour le conditionnement de déchets radioactifs, ou de tout autre matériau organique adéquat pour le conditionnement de déchets non radioactif suivant l'application qui est faite de la présente invention.

Dans un exemple d'application, le composé de la présente invention peut être utilisé par exemple pour piéger l'hydrogène de radiolyse au sein d'une matrice organique de conditionnement de déchets radioactifs.

Ainsi, la présente invention se rapporte également à un procédé de conditionnement d'un déchet solide, ledit procédé comprenant les étapes suivantes :

a) enrobage au moyen d'un matériau organique de conditionnement préalablement liquéfié par chauffage du déchet solide à conditionner et d'un composé piégeur d'hydrogène conforme à la présente invention ;
b) refroidissement et solidification de l'enrobé obtenu à l'étape a).

Les matrices de conditionnement utilisables, ainsi que les déchets solides qui peuvent être enrobés suivant ce procédé sont décrits ci-dessus.

Lorsque le déchet solide est radioactif, il peut être obtenu par tout procédé connu de l'homme du métier pour extraire un déchet solide radioactif d'un effluent.

Par exemple, lorsque l'effluent est liquide, il peut s'agir avantageusement d'un traitement chimique de co-précipitation de l'effluent. Ainsi, selon une variante avantageuse du procédé de l'invention, le traitement chimique de co-précipitation peut avoir pour double objectif de décontaminer l'effluent radioactif par un traitement chimique de co-précipitation conduisant à un déchet solide radioactif et de synthétiser in situ le composé piégeur de $H_2$ suivant le procédé de synthèse décrit dans la présente. Dans cette variante, la phase solide de co-précipitation obtenue, constituée d'un mélange du déchet solide radioactif et du composé piégeur de $H_2$, est incorporée directement dans le matériau organique de conditionnement suivant l'étape a) du procédé de l'invention.

Selon l'invention, dans l'exemple d'un enrobage en matrice bitume, la charge saline maximale (c'est-à-dire la somme déchet + composé piégeur) dans l'enrobé ne peut dépasser 45% / enrobé (exprimée en masse de sel/masse d'enrobé) soit 82% / bitume (exprimée en masse de sel / masse de bitume) .

De manière générale, de préférence, le déchet solide à conditionner et le composé piégeur d'hydrogène conforme à la présente invention sont mélangés avant leur enrobage, afin d'obtenir une répartition homogène du composé de l'invention et du déchet au sein de l'enrobé et favoriser ainsi l'efficacité de piégeage de l'hydrogène.

La présente invention trouve de très nombreuses applications, puisqu'elle est utilisable dans toutes les situations, par exemple dans l'industrie ou au laboratoire, où de l'hydrogène (ou du tritium) gazeux est généré, dégagé ou évacué, dans l'objectif par exemple d'en limiter les rejets dans l'environnement, notamment pour des raisons de pollution ou de contamination, ou d'en contrôler les teneurs dans des milieux confinés, notamment pour des raisons de sécurité.

La mise en oeuvre d'un piège à hydrogène ou à tritium au moyen du composé de la présente invention peut être réalisée par différents moyens, qui seront choisis en fonction des conditions d'utilisation et du milieu dans lequel le piège est mis en oeuvre. A titre d'exemples, on peut citer les moyens suivants :

- par contact direct de l'hydrogène gazeux avec le composé pulvérulent à l'abri de l'air ;
- par contact direct de l'hydrogène, introduit par bullage ou bien généré in situ, avec une suspension constituée par le composé de la présente invention en solution non oxydante ;

- par maintien du composé pulvérulent entre deux plaques poreuses à travers lesquelles l'hydrogène ou le gaz comprenant de l'hydrogène à piéger peut diffuser ;
- par incorporation du composé de la présente invention dans un matériau inerte chimiquement vis-à-vis du produit. Il peut s'agir d'un matériau organique ou non, solide ou à l'état visqueux, à travers lequel l'hydrogène diffuse ou au sein duquel l'hydrogène est généré, par exemple par radiolyse ;
- par dépôt surfacique du composé piégeur d'hydrogène, en couche d'épaisseur adéquate et à l'abri de l'air, sur tout ou partie des faces externes du système chimique générateur d'hydrogène gazeux ;
- par incorporation d'une ou de plusieurs couches successives de composé de la présente invention en sandwich au sein du système chimique générateur d'hydrogène gazeux.

Dans l'exemple du conditionnement de déchets radioactifs de faible et moyenne activité en matrice bitume, le composé piégeur d'hydrogène de la présente invention, intégré au sein de la matrice bitume, dispose de plusieurs atouts majeurs :

- Il possède la double propriété chimique de décontamination en radionucléides et de piège à hydrogène ;
- Utilisé comme réactif de décontamination dans le cadre d'un procédé de traitement préalable des effluents radioactifs, le composé de la présente invention se retrouve naturellement présent dans les boues de retraitement enrobées dans le bitume, boues dans lesquelles il est chimiquement stable ;
- L'utilisation en routine du composé de la présente invention dans le cadre d'un procédé de traitement des effluents évite de recourir à d'autres réactifs piégeurs d'hydrogène, dont la stabilité chimique au sein des boues de retraitement reste à démontrer et dont l'utilisation ne serait pas économiquement rentable puisqu'il entraînerait une augmentation de la quantité de boue et donc du nombre de colis ;
- Inerte chimiquement vis-à-vis de la matrice bitume, le composé de la présente invention conserve ses capacités de piège à hydrogène après les opérations d'enrobage en température des boues dans le bitume ;
- Insensible à l'irradiation et protégé de l'oxydation au sein de la matrice bitume, le composé de la présente invention conserve durablement sa réactivité vis-à-vis de l'hydrogène ;
- Le composé de la présente invention est réactif aussi bien vis-à-vis de l'hydrogène gazeux dans les conditions normales de température et de pression que de l'hydrogène généré, par radiolyse notamment, au sein de la matrice bitume.

Ainsi, l'incorporation du composé de la présente invention dans un matériau organique, par exemple le bitume servant de matrice de conditionnement de déchets radioactifs, permet de réduire la production apparente d'hydrogène de radiolyse et corrélativement l'aptitude au gonflement du matériau. Cette application est économiquement importante pour les industriels du retraitement car les propriétés chimiques du composé de la présente invention laissent la possibilité d'augmenter sensiblement les activités équivalentes incorporées par colis de déchets tout en garantissant une bonne tenue mécanique du matériau vis-à-vis de la production de gaz.

D'autres caractéristiques et avantages de la présente invention apparaîtront encore à la lecture des exemples qui suivent, donnés bien entendu à titre illustratif et non limitatif, en référence aux figures annexées.

## Description des figures

- La figure 1 est un graphique illustrant le piégeage d'hydrogène dans une atmosphère d'hydrogène pur avec d'une part un composé de la présente invention (courbe 1) et d'autre part avec un composé commercial (courbe 2) dans une cellule expérimentale. Sur ce graphique, on représente la variation de la pression d'hydrogène P (exprimée en $10^2$ Pa (mbar)) en fonction du temps en heures (t (h)).

- La figure 2 est un graphique illustrant le volume d'hydrogène (V $H_2$ (en ml)) dégagé par kg de bitume, d'une part dans un bitume pur (courbe - O-) et d'autre part dans un enrobé bitume conforme à la présente invention, c'est à dire comprenant un composé de la présente invention (courbe -□-), en fonction de la dose intégrée (exprimé en MGy).

## EXEMPLES

## Exemple 1 : Expérience de piégeage d'hydrogène par contact direct avec le composé pulvérulent

Dans cet exemple, un composé de forme CoS(OH) a été synthétisé en laboratoire par mélange sous agitation magnétique de deux solutions aqueuses de sulfate de cobalt (pureté 97% massique) et de sulfure de sodium (pureté 35% massique) dans les proportions S/Co = 1,5.

Le pH des solutions, respectivement de 5,1 et 13,3 initialement, n'a pas été ajusté. Le pH de la suspension finale n'a pas été ajusté non plus.

Pour cette expérience, une partie du précipité obtenu, de couleur noire, à été séchée à 100°C après filtration et lavage à l'eau. Il a été ensuite broyé afin d'obtenir une poudre de granulométrie allant de 0,7 à 15 $\mu$m.

Dix grammes du composé sous la forme CoS(OH), sec, à l'état pulvérulent, ont été placés dans une cellule étanche de 100 ml à température ambiante ($22 \pm 3$°C) sous atmosphère d'hydrogène pur.

La consommation d'hydrogène par le composé est suivie expérimentalement par mesure de la chute de pression d'hydrogène dans la cellule, l'atmosphère étant régulièrement renouvelée pour compenser l'appauvrissement en hydrogène en fonction du temps. Ce renouvellement permet d'évaluer l'évolution de la cinétique de la réaction au cours du temps et la durabilité du phénomène.

La consommation d'hydrogène par le composé de l'invention s'est traduite par une décroissance nette et expérimentalement mesurable de la pression d'hydrogène à l'intérieur de la cellule comme cela est visible sur la figure 1 annexée. Cette figure représente les variations de la pression totale P (exprimé en $10^2$ Pa (mbar)) au sein de la cellule en fonction du temps (exprimé en heures (h)). Chaque discontinuité de la courbe de piégeage (courbe 1) correspond à un renouvellement de l'atmosphère de la cellule.

A titre de comparaison, la figure 1 montre également la courbe expérimentale de consommation de $H_2$ (courbe 2) obtenue à partir d'un produit commercial sous forme CoS. Aucun piégeage significatif de l'hydrogène n'est observé avec le produit commercial.

A partir des données expérimentales, la capacité de piégeage du composé a pu être évaluée à environ 0,5 mole $H_2$/mole de cobalt, valeur équivalente à sa capacité de piégeage thermodynamique. Ce résultat indique que la réaction de piégeage est totale et ne subit pas de limitations, d'ordre cinétique par exemple.

Cette expérience met en évidence l'aptitude du composé de la présente invention à piéger spontanément et quantitativement à température ambiante l'hydrogène gazeux par contact direct, selon une réaction de type gaz - solide.

Cette expérience permet de confirmer les applications des composés de la présente invention, par exemple dans le cadre de la maîtrise du risque hydrogène.

**Exemple 2 : Expérience de piégeage d'hydrogène généré in situ par radiolyse par un composé de la présente invention enrobé dans un bitume**

Une partie du composé en suspension dont la synthèse est décrite dans l'exemple 1 précédent et à laquelle a été rajoutée une charge minérale inerte de sulfate de baryum, a été intimement mélangée à du bitume en fusion à 140°C jusqu'à évaporation complète de l'eau et obtention d'un mélange homogène comprenant 10% de sels (% massique/ enrobé) dont 0,8% de cobalt (% massique/enrobé).

L'enrobé bitume obtenu comprend le composé de l'invention sous forme CoS(OH) à une teneur de 1,5 % Co / enrobé (% massique).

Le sel de sulfate de baryum a pour seul rôle d'augmenter la charge minérale dans l'enrobé afin d'obtenir une meilleure dispersion et homogénéité du composé de la présente invention au sein de l'enrobé.

Le matériau est un bitume typiquement utilisé dans le cadre du conditionnement des déchets radioactifs de faible et moyenne activité. Il est constitué d'un mélange de produits organiques de poids moléculaires élevés appartenant majoritairement aux trois groupes suivants : aliphatique, naphténique et aromatique. Une composition élémentaire moyenne est la suivante : 85% C ; 10% H ; 1,5% O ; 1,0% N et 2,5% S (% massique).

Un échantillon de l'enrobé contenant le composé de la présente invention et un échantillon de bitume pur ont été soumis à irradiation externe à un débit de dose moyen de 400 Gy/h, jusqu'à atteindre une dose totale intégrée de 5,6 MGy. Le débit de dose de la source décroissant en fonction du temps, celui-ci a varié entre 450 Gy/h et 360 Gy/h au cours de l'expérience qui a duré 580 heures. La dose totale intégrée étant de 5,6 MGy, le débit de dose moyen au cours de l'expérience est donc de 400 Gy/h.

Les données expérimentales de dégagement d'hydrogène (figure 2) démontrent que pour un débit de production d'environ 660 ml $H_2$/kg bitume/MGy, soit environ 0,30 ml $H_2$/kg bitume/heure dans les conditions de l'essai, l'efficacité du piégeage, par le composé CoS(OH), de l'hydrogène généré par radiolyse du bitume est de l'ordre de 80% jusqu'à une dose totale intégrée de 1,5 MGy.

Après une dose totale intégrée de l'ordre de 4,5 MGy, la courbe de dégagement de $H_2$ de l'enrobé (courbe -□-) rejoint asymptotiquement la courbe de dégagement de l'échantillon de bitume pur (courbe -0-) ce qui indique que le composé incorporé au sein de l'enrobé a atteint sa capacité de piégeage maximale.

A partir des données expérimentales, la capacité de piégeage au sein de l'enrobé à été évaluée à 0,48 mol $H_2$/mol Co soit 182 L TPN $H_2$/kg Co, soit une valeur équivalente à la capacité mesurée indépendamment sur le composé pulvérulent et proche de la capacité de piégeage maximale théorique (0,5 mol $H_2$/mol Co soit 190 L TPN / kg Co) du composé.

Ces observations démontrent que le composé de la présente invention sous la forme CoS(OH) est chimiquement inerte vis à vis du bitume et conserve toutes ses capacités de piège à hydrogène même après les opérations d'enrobage en température.

En outre, le composé de la présente invention est insensible à l'irradiation, et est réactif aussi bien vis-à-vis de l'hydrogène gazeux dans les conditions normales de température et de pression que vis à vis de l'hydrogène généré par radiolyse de la matrice bitume.

Les inventeurs ont démontré dans cet exemple que l'incorporation d'un composé de la présente invention, par exemple sous forme CoS(OH), dans une matrice organique, par exemple dans les conditions décrites précédemment, permet de piéger l'hydrogène formé dans ladite matrice.

Par exemple dans le domaine du conditionnement de déchets nucléaires, l'invention permet de réduire la production apparente d'hydrogène de radiolyse des enrobés bitume soumis à irradiation, et corrélativement de réduire significativement l'aptitude au gonflement des colis bitumés de déchets radioactifs en situation d'entreposage.

## Revendications

1. Composé piégeur d'hydrogène **caractérisé en ce qu'** il comprend un au moins un composé minéral de formule générale :

$$MX \, (OH)$$

dans laquelle :

   - M représente un élément de transition divalent ;
   O représente un atome d'oxygène ;
   - X représente un atome du groupe 16 de la classification périodique des éléments, hormis O ; et
   - H représente un atome d'hydrogène

2. Composé selon la revendication 1, dans lequel M est choisi dans le groupe constitué de Cr, Mn, Fe, Co, Ni, Cu et Zn.

3. Composé selon la revendication 1, dans lequel X est choisi dans le groupe constitué de S, Se, Te, et Po.

4. Composé selon la revendication 1, dans lequel M est Co ou Ni.

5. Composé selon la revendication 1 ou 4,
   dans lequel X est S.

6. Procédé de fabrication d'un composé piégeur d'hydrogène selon la revendication 1, ledit procédé comprenant un mélange en solution aqueuse d'au moins un sel dissous de $X^{2-}$ dissous, et d'au moins un sel métallique de M dissous, de manière à former un précipité du, au moins un, composé de formule MX(OH).

7. Procédé selon la revendication 6, dans lequel le sel de $X^{2-}$ est choisi parmi $Na_2$, $(NH_4)_2$, $Li_2$, $K_2$ ou un mélange de ceux-ci.

8. Procédé selon la revendication 6, dans lequel le sel métallique de M est choisi dans le groupe constitué de $MSO_4$, $xH_2O$ ; $M(NO_3)_2$; $M(ClO_4)_2$, $x\,H_2O$ ; et $MCl_2$ ; dans lequel M est tel que défini dans la revendication 1.

9. Procédé selon la revendication 8, dans lequel M est Co ou Ni.

10. Procédé selon la revendication 8 ou 9,
    dans lequel X est S.

11. Procédé selon la revendication 6, dans lequel le mélange en solution aqueuse est effectué à un pH de 4 à 12.

12. Procédé selon la revendication 6, dans lequel le rapport molaire des concentrations $[X^{2-}]$ / $[M^{2+}]$ est de 7/8 à 1,5.

13. Procédé selon la revendication 6, dans lequel le, au moins un, sel métallique précipité est extrait de la solution de préparation par filtration, lavage à l'eau puis séchage.

**14.** Procédé de conditionnement d'un déchet solide, ledit procédé comprenant les étapes suivantes :

a) enrobage au moyen d'un matériau organique de conditionnement préalablement liquéfié par chauffage du déchet solide à conditionner et d'un composé piégeur d'hydrogène conforme à la revendication 1 ;
b) refroidissement et solidification de l'enrobé obtenu à l'étape a).

**15.** Procédé selon la revendication 14, dans lequel le matériau organique est un bitume.

**16.** Procédé selon la revendication 14, dans lequel le déchet est radioactif ou non radioactif.

**17.** Procédé selon la revendication 14, dans lequel le déchet est radioactif.

**18.** Procédé selon la revendication 14 ou 15, dans lequel le composé piégeur d'hydrogène est mélangé avec le bitume en une quantité de 1,5 à 82% au total exprimée en masse de composé piégeur par rapport à la masse de bitume.

**19.** Procédé selon la revendication 14, dans lequel le déchet radioactif représente au minimum 45% en masse de la masse totale du déchet enrobé avec le matériau organique composite après durcissement.

**20.** Procédé selon la revendication 17, comprenant en outre une étape préliminaire de co-précipitation chimique du déchet radioactif sous forme solide et de synthèse du composé piégeur d'hydrogène pour obtenir une phase solide constituée d'un mélange du déchet solide radioactif et du composé piégeur de $H_2$, ladite phase solide étant alors incorporée dans le matériau organique de conditionnement préalablement liquéfié par chauffage suivant l'étape a) du procédé.

**21.** Matériau organique de conditionnement de déchets radioactifs comprenant un matériau organique de conditionnement et au moins un composé piégeur d'hydrogène selon l'une quelconque des revendications 1 à 5.

**22.** Matériau organique de conditionnement de déchets radioactifs selon la revendication 21, dans lequel le matériau organique de conditionnement est un bitume.

**23.** Matériau organique de conditionnement de déchets radioactifs selon la revendication 21 ou 22, dans lequel le ou les composé(s) piégeur(s) d'hydrogène représente(nt) une quantité de 1,5 à 82% au total exprimée en masse de composé piégeur par rapport à la masse de bitume.

**24.** Utilisation d'un composé selon la revendication 1 pour piéger de l'hydrogène.

**25.** Utilisation d'un composé selon la revendication 1 pour piéger l'hydrogène de radiolyse au sein d'une matrice organique de conditionnement de déchets radioactifs.

**26.** Utilisation selon la revendication 25,
dans laquelle la matrice organique est un bitume.

**Claims**

**1.** Hydrogen-trapping compound, **characterized in that** it comprises at least one mineral compound of general formula:

MX (OH)

in which:

- M represents a divalent transition element;
- O represents an oxygen atom;
- X represents an atom of group 16 of the Periodic Table of the Elements, excluding O; and
- H represents a hydrogen atom.

**2.** Compound according to Claim 1, in which M is chosen from the group consisting of Cr, Mn, Fe, Co, Ni, Cu and Zn.

3. Compound according to Claim 1, in which X is chosen from the group consisting of S, Se, Te and Po.

4. Compound according to Claim 1, in which M is Co or Ni.

5. Compound according to Claim 1 or 4, in which X is S.

6. Process for manufacturing a hydrogen-trapping compound according to Claim 1, the said process comprising the mixing, in aqueous solution, of at least one dissolved salt of dissolved $X^{2-}$ and of at least one dissolved metal salt of M, so as to form a precipitate of the at least one compound of formula MX(OH).

7. Process according to Claim 6, in which the $X^{2-}$ salt is chosen from $Na_2$, $(NH_4)_2$, $Li_2$, $K_2$ or a mixture thereof.

8. Process according to Claim 6, in which the metal salt of M is chosen from the group consisting of: $MSO_4 \cdot xH_2O$; $M(NO_3)_2$; $M(ClO_4)_2 \cdot xH_2O$; and $MCl_2$, in which M is as defined in Claim 1.

9. Process according to Claim 8, in which M is Co or Ni.

10. Process according to Claim 8 or 9, in which X is S.

11. Process according to Claim 6, in which the mixing in aqueous solution is carried out a pH of 4 to 12.

12. Process according to Claim 6, in which the molar ratio of the concentrations $[X^{2-}] / [M^{2+}]$ is from 7/8 to 1.5.

13. Process according to Claim 6, in which the at least one precipitated metal salt is extracted from the preparation solution by filtration, washing with water and then drying.

14. Method of encapsulating a solid waste, the said method comprising the following steps:

    a) encapsulation using an organic encapsulation material, liquefied beforehand by heating the solid waste to be encapsulated, and a hydrogen-trapping compound according to Claim 1;
    b) cooling and solidification of the encapsulant obtained in step a).

15. Method according to Claim 14, in which the organic material is a bitumen.

16. Method according to Claim 14, in which the waste is radioactive or non-radioactive.

17. Method according to Claim 14, in which the waste is radioactive.

18. Method according to Claim 14 or 15, in which the hydrogen-trapping compound is mixed with the bitumen in an amount of 1.5 to 82% in total, expressed as mass of trapping compound with respect to the mass of bitumen.

19. Method according to Claim 14, in which the radioactive waste represents at least 45 wt% of the total mass of the waste encapsulated with the composite organic material after curing.

20. Method according to Claim 17, which furthermore includes a preliminary step of chemically coprecipitating the radioactive waste in solid form and of synthesizing the hydrogen-trapping compound in order to obtain a solid phase consisting of a mixture of the radioactive solid waste and of the $H_2$-trapping compound, the said solid phase then being incorporated into the organic encapsulation material, which is preliquefied by heating during step a) of the method.

21. Organic material for encapsulating radioactive waste, comprising an organic encapsulation material and at least one hydrogen-trapping compound according to any one of Claims 1 to 5.

22. Organic material for encapsulating radioactive waste according to Claim 21, in which the organic encapsulation material is a bitumen.

23. Organic material for encapsulating radioactive waste according to Claim 21 or 22, in which the hydrogen-trapping compound(s) represents (represent) in total an amount of 1.5 to 82% expressed as mass of trapping compound with respect to the mass of bitumen.

**24.** Use of a compound according to Claim 1 for trapping hydrogen.

**25.** Use of a compound according to Claim 1 for trapping hydrogen produced by radiolysis within an organic material for encapsulating radioactive waste.

**26.** Use according to Claim 25, in which the organic matrix is a bitumen.


**Patentansprüche**

**1.** Wasserstoff einfangende Verbindung, **dadurch gekennzeichnet, dass** sie wenigstens eine anorganische Verbindung der allgemeinen Formel

$$MX(OH)$$

umfasst, worin

- M ein zweiwertiges Übergangselement bedeutet,
O ein Sauerstoffatom bedeutet,
- X ein Atom der Gruppe 16 des Periodensystems der Elemente mit Ausnahme von O bedeutet, und
- H ein Wasserstoffatom bedeutet.

**2.** Verbindung gemäß Anspruch 1, wobei M aus der aus Cr, Mn, Fe, Co, Ni, Cu und Zn bestehenden Gruppe ausgewählt ist.

**3.** Verbindung gemäß Anspruch 1, wobei X aus der aus S, Se, Te und Po bestehenden Gruppe ausgewählt ist.

**4.** Verbindung gemäß Anspruch 1, wobei M Co oder Ni ist.

**5.** Verbindung gemäß Anspruch 1 oder 4, wobei X S ist.

**6.** Verfahren zur Herstellung einer Wasserstoff einfangenden Verbindung gemäß Anspruch 1, wobei das Verfahren das Mischen in wässriger Lösung wenigstens eines gelösten Salzes von gelöstem $X^{2-}$ und wenigstens eines gelösten Metallsalzes von M unter Bilden eines Niederschlags wenigstens einer Verbindung der Formel MX(OH) umfasst.

**7.** Verfahren gemäß Anspruch 6, wobei das Salz von $X^{2-}$ aus $Na_2$, $(NH_4)_2$, $Li_2$, $K_2$ oder einem Gemisch derselben ausgewählt ist.

**8.** Verfahren gemäß Anspruch 6, wobei das Metallsalz von M aus der aus $MSO_4 \cdot xH_2O$ $M(NO_3)_2$, $M(ClO_4)_2 \cdot xH_2O$ und $MCl_2$ bestehenden Gruppe ausgewählt ist, worin M wie in Anspruch 1 definiert ist.

**9.** Verfahren gemäß Anspruch 8, wobei M Co oder Ni ist.

**10.** Verfahren gemäß Anspruch 8 oder 9, wobei X S ist.

**11.** Verfahren gemäß Anspruch 6, wobei das Mischen in wässriger Lösung bei einem pH von 4 bis 12 durchgeführt wird.

**12.** Verfahren gemäß Anspruch 6, wobei das Molverhältnis der Konzentrationen $[X^{2-}]/[M^{2+}]$ 7/8 bis 1,5 ist.

**13.** Verfahren gemäß Anspruch 6, wobei das wenigstens eine ausgefallene Metallsalz durch Filtration, Waschen mit Wasser und anschließend Trocknen aus der Herstellungslösung gewonnen wird.

**14.** Verfahren zur Konditionierung von festem Abfall, wobei das Verfahren die folgenden Schritte umfasst:

a) Ummanteln mittels eines vorzugsweise verflüssigten organischen Konditionierungsmaterials durch Erhitzen des zu konditionierenden festen Abfalls und einer

Wasserstoff einfangenden Verbindung gemäß Anspruch 1,
b) Kühlen und Verfestigen der in Schritt a) erhaltenen Ummantelung.

15. Verfahren gemäß Anspruch 14, wobei das organische Material Bitumen ist.

16. Verfahren gemäß Anspruch 14, wobei der Abfall radioaktiv oder nicht radioaktiv ist.

17. Verfahren gemäß Anspruch 14, wobei der Abfall radioaktiv ist.

18. Verfahren gemäß Anspruch 14 oder 15, wobei die Wasserstoff einschließende Verbindung mit dem Bitumen in einer Menge von insgesamt 1,5 bis 82 % ausgedrückt als Masse der einfangenden Verbindung bezogen auf die Masse des Bitumens gemischt wird.

19. Verfahren gemäß Anspruch 14, wobei der radioaktive Abfall mindestens 45 Gew.-% der Gesamtmasse des mit dem organischen Materialgemisch ummantelten Abfalls nach dem Verfestigen darstellt.

20. Verfahren gemäß Anspruch 17, das außerdem einen vorangehenden Schritt der chemischen Mitfällung des radioaktiven Abfalls in fester Form und der Synthese der Wasserstoff einfangenden Verbindung unter Erhalt einer festen Phase umfasst, die sich aus einem Gemisch des radioaktiven, festen Abfalls und der $H_2$ einfangenden Verbindung zusammensetzt, wobei die feste Phase dann durch Erhitzen gemäß Schritt a) des Verfahrens in das vorzugsweise verflüssigte organische Konditionierungsmaterial eingearbeitet wird.

21. Organisches Material zur Konditionierung radioaktiver Abfälle umfassend ein organisches Konditionierungsmaterial und wenigstens eine Wasserstoff einfangende Verbindung gemäß einem der Ansprüche 1 bis 5.

22. Organisches Material zur Konditionierung radioaktiver Abfälle gemäß Anspruch 21, bei dem das organische Konditionierungsmaterial Bitumen ist.

23. Organisches Material zur Konditionierung radioaktiver Abfälle gemäß Anspruch 21 oder 22, bei dem die Wasserstoff einfangende(n) Verbindung(en) eine Menge von insgesamt 1,5 bis 82 % ausgedrückt als Masse der einfangenden Verbindung bezogen auf die Masse des Bitumens darstellt (darstellen).

24. Verwendung einer Verbindung gemäß Anspruch 1 zum Einfangen von Wasserstoff.

25. Verwendung einer Verbindung gemäß Anspruch 1 zum Einfangen von Radiolysewasserstoff innerhalb einer organischen Matrix zur Konditionierung radioaktiver Abfälle.

26. Verwendung gemäß Anspruch 25, bei der die organische Matrix Bitumen ist.

**FIG. 1**

**FIG. 2**

**EP 1 658 630 B1**

**RÉFÉRENCES CITÉES DANS LA DESCRIPTION**

**Documents brevets cités dans la description**

- WO 0168516 A
- US 5888665 A
- WO 9726082 A